(19) Europäisches Patentamt

European Patent Office

Office européen des brevets

(11) EP 1 722 577 A1

(12) **EUROPEAN PATENT APPLICATION**

(43) Date of publication:
15.11.2006 Bulletin 2006/46

(51) Int Cl.:
*H04N 17/04* (2006.01)  *H04N 9/73* (2006.01)
*H04N 1/60* (2006.01)

(21) Application number: 05112676.1

(22) Date of filing: 21.12.2005

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 12.05.2005 US 128761

(71) Applicant: Samsung Electronics Co., Ltd.
Yeongtong-gu
Suwon-si, Gyeonggi-do (KR)

(72) Inventors:
• Xu, Ning
92603 Irvine (US)
• Kim, Yeong-taeg
92620 Irvine (US)

(74) Representative: Waddington, Richard
15 Clare Road
Halifax,
West Yorkshire HX1 2HY (GB)

(54) **Method and system for display color correction**

(57) A method is presented for realizing standard colors on a display that does not have the standard primaries. The method enables a display with non-standard primaries to show colors as it has standard SMPTE-C primaries. Further, a method is presented to show the same standard colors on different locations of the display. Measurements of the physical parameters of the display's color primaries are obtained and implemented as calibrated display or a display which can be calibrated by user/calibrator with a color measuring tool such as colorimeter or spectroradiometer.

**Fig. 2**

EP 1 722 577 A1

**Description**

The present invention relates in general to image processing and display calibration, and in particular to standard color realization of a color display using image processing.

The real world scene contains millions of different colors with different hues and saturations. Reproducing these colors correctly is an essential goal of all color reproduction systems, including input systems (e.g., scanners, still and video cameras, etc.) and output system (e.g., printers, displays, big silver screens, etc.). The goal of color reproduction is to reproduce exactly the same colors as they are perceived, which is extremely difficult. First, both the input and output of color reproduction systems have a limited color gamut, meaning only the color within the color gamut can be recorded by the input device or reproduced by the output device. In addition, the color gamut is different for different devices. Once a color is recorded as values based on one particular input device's primary colors, the color values are associated with that input device. While the color values are transmitted to reproduce the original color, the output device should have the exactly same color settings as the particular input device in order to reproduce the same color. However, this is not always the case and different output devices show different colors for the same color value.

The television industry has attempted to solve this problem by setting the same color standard for both the input and output systems. In this way, color reproduction becomes simpler for displays since only compliance with the standard is needed, and considering the input device's color setting is unnecessary. Still, it is difficult and expensive to completely comply with the color standard with new display technologies such as LCD, DLP and PDP, without using the traditional CRT phosphors. Professional color calibration is usually required to achieve better color reproduction of the TV set. At the same time, as the displays are becoming larger, it is usually difficult to achieve uniform colors across the screens. As such, there is a need for a method and system to achieve standard color for nonstandard color displays and to achieve uniform color across the screen for those displays

The present invention addresses the above needs.

The present invention provides methods and systems that achieve standard color for nonstandard color displays and achieve uniform color across the screen for those displays.

According to the present invention there is provided an apparatus and method as set forth in the appended claims. Preferred features of the invention will be apparent from the dependent claims, and the description which follows.

A method and corresponding system for realizing standard colors on displays using an image processing approach is provided. As mentioned, the realization of standard color in hardware is relatively difficult and expensive. The present invention seeks to improve the color accuracy of a display that is biased in hardware. To do so, color measurements are required for computing a color transformation that can transform the input color values to output color values such that the display shows correct colors. This can be implemented either as a built- in transformation for the display, or as a system allowing user input of measurements wherein the system computes the corresponding transformation. In addition, the present invention enables a display to show uniform standard color on different locations of the display. This requires color measurements of different locations of the display, wherein interpolation is used for the color transformation of those locations that are not directly measured.

Other features and advantages of the present invention will be apparent from the following specifications taken in conjunction with the following drawings.

FIG. 1 shows two sets of color primaries, one being an example of device primaries and the other standard primaries defined by SMPTE C standard.

FIG. 2 shows an example block diagram of a system for transforming the input RGB values to an output RGB values according to an embodiment of the present invention.

FIG. 3 shows an example block diagram of a system for realizing uniform standard colors according to an embodiment of the present invention.

FIG. 4 shows example interpolation system for uniform standard colors according to an embodiment of the present invention.

Referring to the drawings, example embodiments of the present invention are now described. In one example, measurements of the colors of the display are utilized. Colorimeters or spectroradiometers that measure the CIE Yxy or CIE XYZ values of the light output from the display can be used. A first example method requires three measurements $Y_i,x_i,y_i$ or $X_i,Y_i,Z_i$ $i=1,2,3,$ of the display, each of which corresponds to the input RGB value of $R_i,G_i,B_i$ $i=1,2,3.$ If the instruments provide only Yxy values, the corresponding transformation from Yxy to XYZ is as follows:

$$X = x \bullet Y / y,$$

$$Y = Y,$$

$$Z = \left( \frac{1}{y} - \frac{x}{y} - 1) \right) \bullet Y$$

A simple way is to set the three normalized input RGB values as *(1, 0, 0), (0, 1, 0)* and *(0, 0, 1),* and obtain their CIE XYZ values through the measurements. The measured Y values need to be normalized so that they are ranging from *0* to *1.* If we assume that the color space transformation between the device dependent RGB color and the device independent XYZ color space is a linear transformation, i.e.,

$$\begin{bmatrix} X \\ Y \\ Z \end{bmatrix} = M \bullet \begin{bmatrix} R \\ G \\ B \end{bmatrix},$$

it can be seen that for three XYZ values of the above RGB colors, the transformation matrix M can be calculated as:

$$M = \begin{pmatrix} X_1 & X_2 & X_3 \\ Y_1 & Y_2 & Y_3 \\ Z_1 & Z_2 & Z_3 \end{pmatrix}.$$

Measurements of any other non-singular three colors can also be used to calculate M. It can initially be assumed that:

$$M = \begin{pmatrix} m_{11} & m_{12} & m_{13} \\ m_{21} & m_{22} & m_{23} \\ m_{31} & m_{32} & m_{33} \end{pmatrix},$$

wherein after plugging in the three measurements, we have:

$$\begin{cases} X_i = m_{11}R_i + m_{12}G_i + m_{13}B_i, \\ Y_i = m_{21}R_i + m_{22}G_i + m_{23}B_i, \quad i = 1, 2, 3 \\ Z_i = m_{31}R_i + m_{32}G_i + m_{33}B_i, \end{cases}.$$

The transformation matrix M can be obtained by solving the above relations for $X_i$, $Y_i$ and $Z_i$, for i = 1, 2, 3.

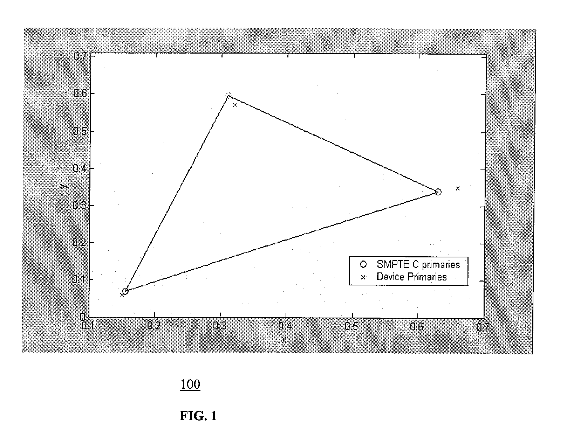

In one example embodiment of the present invention, it is assumed that the incoming RGB values comply to the SMPTE-C standard, which is a standard for broadcasting. The example plot 100 in Fig. 1 shows the two sets of color primaries. In Fig. 1, the triangle's vertices are the SMPTE-C primaries and the triangle itself defines the SMPTE-C color gamut. One set is the device primaries and the other set is the standard primaries. It can be seen that the two sets of primaries are different. It is usually difficult to achieve the SMPTE-C standard primaries on a consumer display device. Since the incoming RGB values are associated with the SMPTE-C primaries, it will be rendered incorrectly on the display with primaries different from the SMPTE-C primaries. In order to render the correct colors, we need to modify the incoming RGB values based on the relationship between the two sets of primaries. The relationship between SMPTE-C compliant RGB values and the CIE XYZ values is as follows:

$$\begin{bmatrix} X \\ Y \\ Z \end{bmatrix} = M_0 \begin{bmatrix} R \\ G \\ B \end{bmatrix}$$

$$= \begin{pmatrix} 0.3935 & 0.3653 & 0.1916 \\ 0.2124 & 0.7011 & 0.0866 \\ 0.0187 & 0.1119 & 0.9582 \end{pmatrix} \bullet \begin{bmatrix} R \\ G \\ B \end{bmatrix}$$

Thus, for the input RGB values ($R_{in}, G_{in}, B_{in}$), which comply to SMPTE C color standard, we can use the above equation to transform them to device independent XYZ values. To realize these XYZ values on the display with non-standard primaries, new RGB values ($R_{out}, G_{out}, B_{out}$) need to be calculated so that by displaying ($R_{out}, G_{out}, B_{out}$) on the non-standard display, the device independent color XYZ transformed from ($R_{in}, G_{in}, B_{in}$) can be achieved.

As we earlier, the relationship between device dependent RGB values and the device independent color values XYZ can be obtained from the three measurements of non-singular colors. Therefore, the output color values ($R_{out}, G_{out}, B_{out}$) can be computed as:

$$\begin{pmatrix} R_{out} \\ B_{out} \\ G_{out} \end{pmatrix} = M^{-1} \begin{pmatrix} X \\ Y \\ Z \end{pmatrix}$$

$$= M^{-1} \bullet M_0 \begin{pmatrix} R_{out} \\ B_{out} \\ G_{out} \end{pmatrix}$$

Using the above equation, output RGB values can be directly determined based on the input RGB values. However, the computed output RGB values may be out of range *[0, 1],* meaning the values cannot be physically produced by the display. To address the out-of-range issue, in one example, the output RGB values are clipped to the range *[0, 1].*

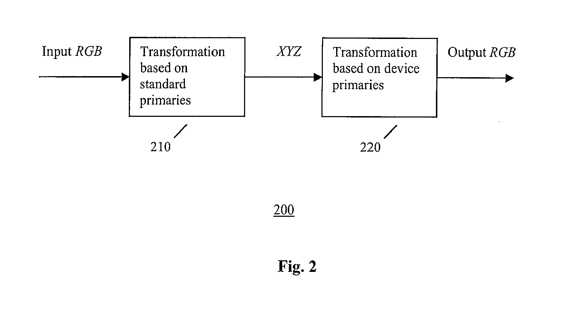

Fig. 2 shows a block diagram of a system 200 according to the present invention for transforming the input RGB values to an output RGB values. A first transformation block 210 implements a method whereby the input RGB values are first transformed to CIE XYZ values based on the standard primaries that the device needs to realize. A second transformation block 220 implements a method whereby the CIE XYZ values are transformed back to RGB values for output, but with a transformation based on measurements of the device primaries.

The above description provides an example embodiment of the present invention which uses measurements of the Yxy or XYZ color values of three colors, and assumes linear transformation between the device dependent RGB color space and the CIE XYZ color space. In the following example according to the present invention, it is assumed that the linear transformation between the two color spaces holds, but measurements for *n* colors are used, where *n>3*. Similar to the previous example, for *n* different color measurements, there are *3n* different equations (e.g., 9 equations when *n* = 3):

$$\begin{cases} X_i = m_{11}R_i + m_{12}G_i + m_{13}B_i, \\ Y_i = m_{21}R_i + m_{22}G_i + m_{23}B_i, \qquad i = 1, 2, ..., n, \text{ where } n > 3. \\ Z_i = m_{31}R_i + m_{32}G_i + m_{33}B_i, \end{cases}$$

In the above linear equations there are 9 unknown variables $m_{ij}, i$=1,2,3 and $j$=1,2,3, which can be determined through least square fitting by minimizing:

$$J_1 = \sum_{i=1}^{n} (m_{11}R_i + m_{12}G_i + m_{13}B_i - X_i)^2,$$

$$J_2 = \sum_{i=1}^{n}(m_{21}R_i + m_{22}G_i + m_{23}B_i - Y_i)^2,$$

$$J_3 = \sum_{i=1}^{n}(m_{31}R_i + m_{32}G_i + m_{33}B_i - Z_i)^2.$$

The parameters $m_{ij}$ that minimize $J_i$ can be computed by solving the linear relations of $\dfrac{\partial J_i}{\partial m_{ij}} = 0$ where $i, j=1,2,3$.

To account for the nonlinearity of the display characteristics (not unusual for consumer displays) interpolation is used to obtain the device dependent RGB color from two neighboring linear transformations of the device independent XYZ color. In an example embodiment of our invention, measurement of CIE XYZ values of a set of different colors is utilized. For simplicity, $n$ colors for each RGB component are measured, i.e., in total $3n$ different colors $(R_i,0,0),(0,G_i,0)$ and $(0,0,B_i)$, $i=1,2,...,n$.

For an input color $(R_{in},G_{in},B_{in})$, the nearest RGB colors $(R_u,G_u,B_u)$ and $(R_d,G_d,B_d)$ for each of their component color values are measured, such that $R_d<R_{in}<R_u$, $G_d<G_{in}<G_u$ and $B_d<B_{in}<B_u$. From the measurements of $(R_u,0,0)$ $(0,G_u,0)$ and $(0,0,B_u)$, a transformation matrix $M_u$ is computed, using which the output $(R_{out}^u,G_{out}^u,B_{out}^u)$ is determined as:

$$\begin{pmatrix} R_{out}^u \\ G_{out}^u \\ B_{out}^u \end{pmatrix} = M_u^{-1} \bullet M_0 \bullet \begin{pmatrix} R_{in} \\ G_{in} \\ B_{in} \end{pmatrix}$$

Similarly, corresponding transformation $M_d$ is determined through the measurements of $(R_d,0,0)$, $(0,G_d,0)$ and $(0,0,B_d)$, and used to compute the output $(R_{out}^d,G_{out}^d,B_{out}^d)$ as :

$$\begin{pmatrix} R_{out}^d \\ G_{out}^d \\ B_{out}^d \end{pmatrix} = M_d^{-1} \bullet M_0 \bullet \begin{pmatrix} R_{in} \\ G_{in} \\ B_{in} \end{pmatrix}$$

The final output $(R_{out},G_{out},B_{out})$ can be obtained by interpolating said two upper and lower outputs $(R_{out}^u,G_{out}^u,B_{out}^u)$ and $(R_{out}^d,G_{out}^d,B_{out}^d)$. A simple interpolation method includes computing:

$$\begin{cases} R_{out} = a_r R_{out}^d + (1-a_r)R_{out}^u, \\ G_{out} = a_g G_{out}^d + (1-a_g)G_{out}^u, \\ B_{out} = a_b B_{out}^d + (1-a_b)B_{out}^u, \end{cases}$$

where

$$\begin{cases} a_r = \dfrac{R_{in} - R_d}{R_u - R_d}, \\[2ex] a_g = \dfrac{G_{in} - G_d}{G_u - G_d}, \\[2ex] a_b = \dfrac{B_{in} - B_d}{B_u - B_d}. \end{cases}$$

In the above description, examples of transforming the input RGB color values to achieve standard colors are provided. The present invention can also be implemented within a display hardware that stores all the parameters for transformation of RGB colors from input to output in order to display the correct color. The present invention can also be implemented as a calibration capability of the display, wherein that user/calibrators can measure the CIE XYZ or CIE Yxy values of required RGB input color values, and the hardware then establishes the transformation inside the display accordingly. In that case, the measured values can be input to the display device through any input method, such as the TV remote.

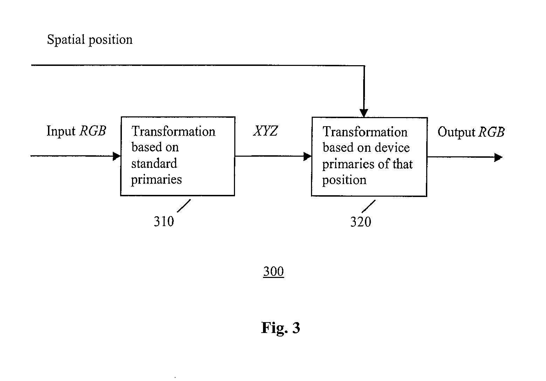

The display device may have different color characteristics at different locations of the screen. To compensate and achieve uniform standard color across the screen, the present invention further provides the use of the above methods on different display locations (such that the transformation is location dependent) to realize color uniformity. Accordingly, Fig. 3 shows a block diagram of an example system 300 according to the present invention for realizing uniform standard colors. The spatial position is given for the input RGB values where the device primaries are measured at that position. A first transform block 310 implements a method whereby the input RGB values are transformed into corresponding CIE XYZ values based on standard primaries. A second transform block 320 implements a method whereby said corresponding CIE XYZ values are transformed back to output RGB values based on the primaries measured at that position. As shown by example in Fig. 3, colors are measured on different locations (spatial position) in order to output the correct color at each location.

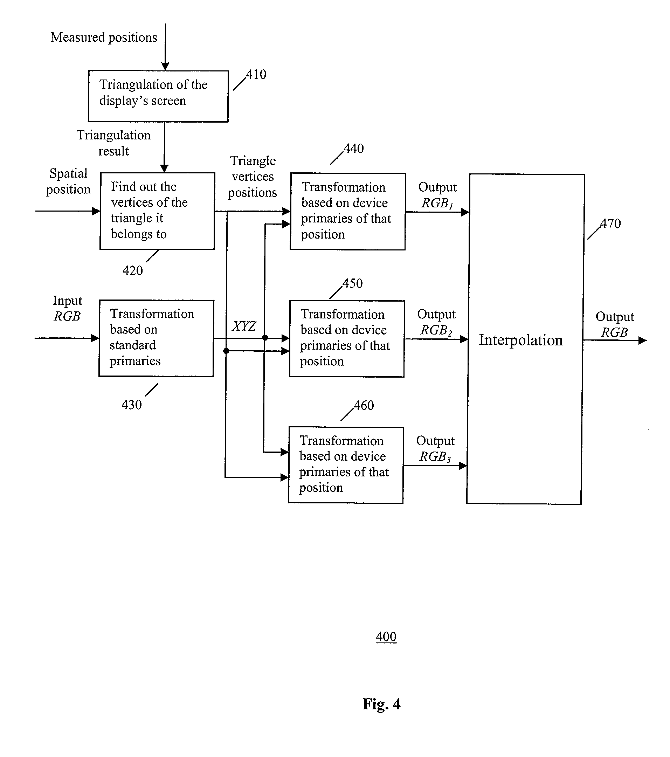

Interpolation can be used to achieve the color correctness for the locations where measurements of colors are not available. Accordingly, Fig. 4 shows an example system 400 according to the present invention that uses interpolation for realizing uniform standard colors. In the system 400, the measured positions are used to triangulate the entire screen into small triangles. The position of the input RGB color determines three vertices of the triangle that the position belongs to. Three different RGB values are calculated based on the color measurements of the three different vertices. The three calculated RGB values are then interpolated based on their spatial position to obtain an output RGB value.

The system 400 includes a triangulator 410; a vertices finder 420; transform blocks 430, 440, 450, 460; and an interpolator 470. The input RGB values are transformed into device independent XYZ values using the transform block 430.

The triangulator 410 triangulates the entire display screen into triangles using four corners of the display screen and the positions of measurements as vertices. The triangulation can be implemented using a Delaunay triangulation method, or we can simply measure colors on a simple grid and triangulate the grid. Each vertex of the triangulation will have its own transformation from device independent XYZ color to RGB color based on the color measurement performed on the vertex. If the color measurement is not available for the corners, the measurements of their nearest neighbors can be utilized. For each input spatial position, the vertices finder 420 can find a triangle based on the triangulation result. Each input RGB color will first be transformed to a device independent XYZ values using a transformation M in the transform block 430. The transformed XYZ values are again transformed through transform blocks 440, 450, 460, to compute the output RGB values Output RGB$_1$, Output RGB$_2$ and Output RGB$_3$, respectively. Each of the transform blocks 440, 450 and 460 implements a transformation based on color measurements of one of the vertex positions of the triangle found in block 420. The three output RGB values are then interpolated in the interpolation block 470 to obtain a final output RGB value is sent to the display.

The present invention has been described in considerable detail with reference to certain preferred versions thereof; however, other versions are possible. Therefore, the spirit and scope of the appended claims should not be limited to the description of the preferred versions contained herein.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1.  A method for realizing standard color of a visual display, comprising the steps of:

    receiving an input color value;
    computing an output color value such that the output color shown on the visual display is the best match to the input color value shown on a standard display; and
    sending the output color to the standard display.

2.  The method of claim 1 wherein the step of computing an output color value further includes the steps of:

    computing transformations of the input color value such that the output color shown on the display is the best match to the input color value shown on the standard display.

3.  The method of claim 1 or claim 2 wherein the step of computing an output color value further includes the steps of:

    measuring the physical colors of the display with known input color values; and
    computing the output color value using transformations based on the measured colors.

4.  The method of claim 3 wherein the step of measuring the physical colors of the display further includes the steps of measuring three primary colors CIE Yxy values, or CIE XYZ values.

5.  The method of claim 3 or claim 4 wherein the step of measuring the physical colors of the display further includes the steps of measuring a set of CIE Yxy or CIE XYZ values for more than three different colors.

6.  The method of any one of claims 3 to 5 wherein the step of computing the output color through transformations based on the measured colors further includes the steps of computing a linear transformation based on the measurements of three primary colors using the method of claim 4.

7.  The method of any one of claims 3 to 6 wherein the step of computing the output color through transformations based on the measured colors further includes the steps of computing a linear transformation based on the measurements of a set of measured values using the method of claim 5 by least squares fitting.

8.  The method of any one of claims 3 to 7 wherein the step of computing the output color through transformations based on the measured colors further includes the steps of computing linear transformations based on the measurements of neighboring measured values and using interpolation to compute the output color.

9.  A system for realizing spatially uniform standard color of a visual display, comprising:

    an input device for receiving an input color value and its spatial location;
    means for computing an output color value such that the output color shown on said spatial location is the best match to the input color value shown on a standard display; and
    means for sending the output color to the display.

10. The system of claim 9 wherein the means for computing an output color value further obtains measurements of the color parameters in different locations of the display, and computes transformations that realize the standard color for different locations.

11. The system of claim 10 wherein the means for computing an output color further computes transformations using interpolation based on the measured color parameters of different locations of the display.

100

**FIG. 1**

Input *RGB* → [ Transformation based on standard primaries ] → *XYZ* → [ Transformation based on device primaries ] → Output *RGB*

210

220

200

**Fig. 2**

Spatial position

Input *RGB* → | Transformation based on standard primaries | → *XYZ* → | Transformation based on device primaries of that position | → Output *RGB*

310

320

<u>300</u>

**Fig. 3**

Measured positions

Triangulation of the
display's screen                    410

Triangulation
result

Spatial                          Triangle
position    Find out the          vertices                440
           vertices of the        positions    Transformation          Output
           triangle it                          based on device         $RGB_1$
           belongs to                           primaries of that                      470
                                                position
              420

                                                            450
Input                                                                              Output
$RGB$    Transformation                         Transformation          Output     $RGB$
         based on           $XYZ$               based on device         $RGB_2$    Interpolation
         standard                               primaries of that
         primaries                              position

              430                                           460

                                                Transformation          Output
                                                based on device         $RGB_3$
                                                primaries of that
                                                position

400

Fig. 4

European Patent
Office

**EUROPEAN SEARCH REPORT**

Application Number

EP 05 11 2676

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 962 418 A (KAMAGA ET AL) 9 October 1990 (1990-10-09) * column 3, line 32 - column 7, line 51 * | 1-11 | INV. H04N17/04 H04N9/73 H04N1/60 |
| X | EP 1 229 744 A (SONY CORPORATION) 7 August 2002 (2002-08-07) * paragraph [0051] - paragraph [0072] * | 1 | |
| A | EP 0 947 975 A (HITACHI, LTD; HITACHI VIDEO & INFORMATION SYSTEM, INC) 6 October 1999 (1999-10-06) * paragraph [0021] - paragraph [0039] * | 1-11 | |
| A | US 5 721 572 A (WAN ET AL) 24 February 1998 (1998-02-24) * column 3, line 38 - column 4, line 31 * | 1-11 | |

TECHNICAL FIELDS
SEARCHED     (IPC)

H04N

The present search report has been drawn up for all claims

| Place of search | Date of completion of the search | Examiner |
|---|---|---|
| Munich | 26 July 2006 | Penchev, P |

## ANNEX TO THE EUROPEAN SEARCH REPORT
## ON EUROPEAN PATENT APPLICATION NO.

EP 05 11 2676

This annex lists the patent family members relating to the patent documents cited in the above-mentioned European search report.
The members are as contained in the European Patent Office EDP file on
The European Patent Office is in no way liable for these particulars which are merely given for the purpose of information.

26-07-2006

| Patent document cited in search report | | Publication date | Patent family member(s) | | Publication date |
|---|---|---|---|---|---|
| US 4962418 | A | 09-10-1990 | NONE | | |
| EP 1229744 | A | 07-08-2002 | JP | 2002232905 A | 16-08-2002 |
| | | | US | 2002135828 A1 | 26-09-2002 |
| EP 0947975 | A | 06-10-1999 | JP | 11288241 A | 19-10-1999 |
| | | | US | 6344857 B1 | 05-02-2002 |
| US 5721572 | A | 24-02-1998 | NONE | | |

For more details about this annex : see Official Journal of the European Patent Office, No. 12/82